# FASCICULE DE BREVET EUROPEEN

(11) **EP 1 006 020 B1**
(45) Date de publication et mention de la délivrance du brevet: **25.01.2006**
(21) Numéro de dépôt: 99402968.4
(22) Date de dépôt: 29.11.1999
(51) Int. Cl.: B60Q 1/14

(54) **Procédé et dispositif de commande automatique des feux d'un véhicule automobile**
Verfahren und Einrichtung zur automatischen Steuerung von Kfz-Leuchten
Method and device for automatically controlling vehicle lights

(30) Priorité: 02.12.1998 FR 9815236
(43) Date de publication de la demande: 07.06.2000
(73) Titulaire: AUTOMOBILES PEUGEOT, 75116 Paris (FR); AUTOMOBILES CITROEN, 92200 Neuilly-sur-Seine (FR)
(72) Inventeur: Loth, Siri Yuth, 95350 Saint Brice sous Foret (FR)
(74) Mandataire: Habasque, Etienne J. Jean-François

(56) Documents cités:
- EP-A- 0 711 680
- DE-A- 19 630 216
- FR-A- 2 598 529
- GB-A- 2 293 504
- US-A- 5 449 974

## Description

La présente invention concerne un procédé et un dispositif de commande automatique des feux d'un véhicule automobile à partir d'une information de fonctionnement des moyens d'essuyage du pare-brise de ce véhicule.

Un procédé selon ce preambule de la revendication 1 est connu du document US 5,449,974.

La sécurité de conduite des véhicules est une préoccupation importante des constructeurs de véhicules.

On sait que pour améliorer cette sécurité, il convient d'allumer les feux du véhicule par exemple en cas de pluie.

Le but de l'invention est donc de proposer un procédé et un dispositif de commande automatique des feux qui permettent de remplir cette fonction.

A cet effet, l'invention a pour objet un procédé de commande automatique des feux d'un véhicule automobile à partir d'une information de fonctionnement de moyens d'essuyage du pare-brise de ce véhicule, caractérisé en ce que l'on allume les feux du véhicule :
- lorsque les moyens d'essuyage fonctionnent de façon intermittente avec un nombre prédéterminé de cycles de balayage pendant une première période de temps,
- au bout d'une seconde période de temps si les moyens d'essuyage fonctionnent en petite vitesse, ou
- au bout d'une troisième période de temps si les moyens d'essuyage fonctionnent en grande vitesse.

Selon un autre aspect, l'invention a également pour objet un dispositif de commande automatique des feux d'un véhicule automobile à partir d'une information de fonctionnement de moyens d'essuyage du pare-brise de ce véhicule, pour la mise en oeuvre d'un procédé selon l'une quelconque des revendications précédentes, caractérisé en ce que les moyens d'essuyage sont reliés à des moyens de pilotage automatique de leur fonctionnement raccordés à un capteur de pluie associé au véhicule et en ce qu'il comporte des moyens d'analyse du fonctionnement des moyens d'essuyage du pare-brise de ce véhicule pour contrôler l'allumage/extinction des feux de celui-ci.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant la structure générale d'un exemple de réalisation d'un dispositif de commande selon l'invention; et
- la Fig.2 représente un organigramme illustrant par exemple le fonctionnement d'un procédé selon l'invention.

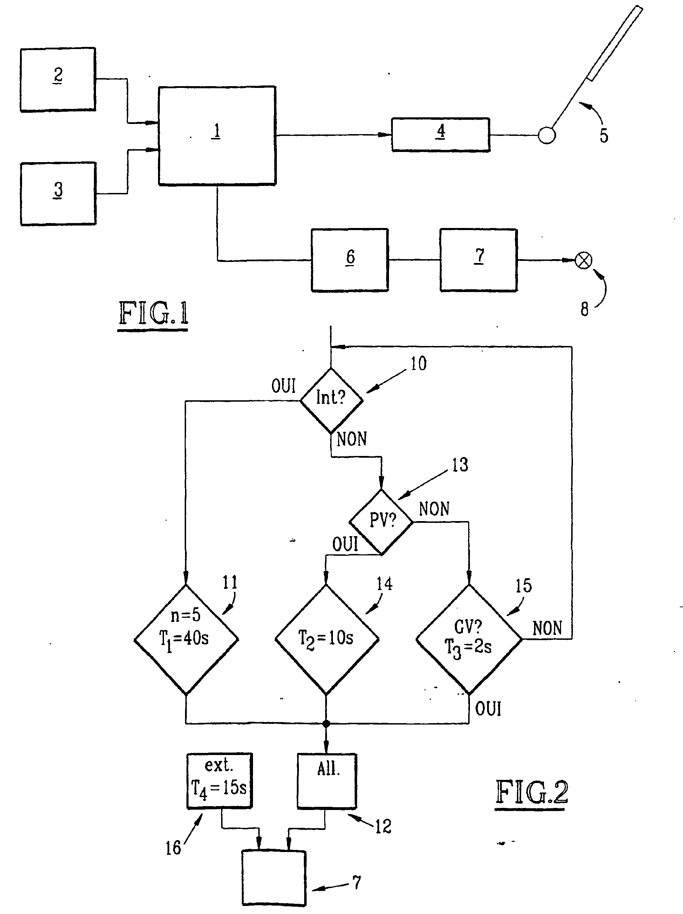

On a en effet représenté sur la figure 1, un dispositif de commande automatique des feux d'un véhicule automobile, à partir d'une information de fonctionnement de moyens d'essuyage du pare-brise de ce véhicule, qui comporte une unité centrale de traitement d'informations désignée par la référence générale 1, reliée en entrée par exemple au commodo 2 du véhicule et plus particulièrement aux organes de celui-ci associés à la commande des moyens d'essuyage du pare-brise et pilotables par le conducteur du véhicule.

Cette unité centrale de traitement d'informations 1 peut également être reliée en entrée à un capteur de pluie désigné par la référence générale 3, associé au véhicule et permettant d'assurer une commande automatique des moyens d'essuyage en fonction de l'intensité de la pluie.

En sortie, l'unité centrale de traitement d'informations 1 est reliée à des moyens de motorisation 4 des moyens d'essuyage 5 du pare-brise du véhicule.

A partir de cette structure, on conçoit qu'il est possible de piloter le fonctionnement des moyens d'essuyage, par exemple de façon intermittente; en petite vitesse ou en grande vitesse, selon l'intensité de la pluie, de façon classique.

La structure de ce dispositif étant bien connue dans l'état de la technique, on ne la décrira pas plus en détail par la suite.

Selon l'invention, l'unité centrale de traitement d'informations 1 est également reliée à des moyens 6 d'analyse du fonctionnement de ses moyens d'essuyage pour contrôler le fonctionnement de moyens de commande automatique 7 des feux 8 du véhicule.

Les moyens d'analyse 6 comprennent par exemple un processeur approprié permettant d'analyser le fonctionnement des moyens d'essuyage pour contrôler l'allumage/extinction des feux du véhicule.

Un organigramme illustrant un exemple de fonctionnement de ce processeur est représenté sur la figure 2.

C'est ainsi par exemple que lors d'une première étape désignée par la référence générale 10, ce processeur détermine si les moyens d'essuyage du pare-brise du véhicule fonctionnent de manière intermittente ou non.

Si c'est le cas, lors de l'étape 11, ce processeur surveille le fonctionnement des moyens d'essuyage pour déterminer si ceux-ci fonctionnent avec un nombre prédéterminé n de cycles de balayage, pendant une première période de temps, ce nombre de cycles n étant par exemple de 5 au minimum et cette première période de temps T1 étant égale à environ 40 secondes au maximum, pour déclencher lors de l'étape 12, l'allumage des feux du véhicule par les moyens de commande automatique 7.

Si la réponse au test lors de l'étape 10 est négative, le processeur 6 détermine alors lors de l'étape 13, si les moyens d'essuyage fonctionnent en petite vitesse ou non.

Si c'est le cas, lors de l'étape 14, ce processeur analyse le fonctionnement des moyens d'essuyage pour déclencher l'allumage des feux du véhicule si les moyens d'essuyage fonctionnent en petite vitesse pendant une seconde période de temps T2 égale par exemple à environ 10 secondes.

Si la réponse au test en 13 est négative, le processeur 6 analyse alors le fonctionnement des moyens d'essuyage du pare-brise du véhicule pour déterminer lors de l'étape 15, que ceux-ci fonctionnent en grande vitesse pendant une troisième période de temps T3 égale à environ 2 secondes par exemple avant de déclencher l'allumage des feux du véhicule lors de l'étape 12.

L'extinction des feux du véhicule est quant à elle pilotée après une quatrième période de temps T4 suivant la fin du dernier cycle de balayage, cette quatrième période de temps étant par exemple fixée par des moyens de temporisation 16, et la quatrième période de temps étant égale à environ 15 secondes par exemple.

On conçoit alors qu'un tel procédé et un tel dispositif permettent d'adapter la commande automatique de l'allumage/extinction des feux du véhicule en fonction par exemple de l'intensité de la pluie.

## Revendications

1. Procédé de commande automatique des feux d'un véhicule automobile à partir d'une information de fonctionnement de moyens d'essuyage (5) du pare-brise de ce véhicule, **caractérisé en ce que** l'on allume (12) les feux (8) du véhicule :
- lorsque les moyens d'essuyage fonctionnent de façon intermittente (11) avec un nombre prédéterminé de cycles de balayage (n) pendant une première période de temps (T1),
- au bout d'une seconde période de temps (T2) si les moyens d'essuyage fonctionnent en petite vitesse (14), ou
- au bout d'une troisième période de temps (T3) si les moyens d'essuyage fonctionnent en grande vitesse (15).

2. Procédé selon la revendication 1, **caractérisé en ce que** le nombre de cycles (n) est de 5 au minimum et la première période de temps (T1) est égale à environ 40 secondes au maximum.

3. Procédé selon la revendication 1 ou 2, **caractérisé en ce que** la seconde période de temps (T2) est égale à environ 10 secondes.

4. Procédé selon l'une quelconque des revendications précédentes, **caractérisé en ce que** la troisième période de temps (T3) est égale à environ 2 secondes.

5. Procédé selon l'une quelconque des revendications précédentes, **caractérisé en ce que** l'on éteint (16) les feux du véhicule après une quatrième période de temps (T4) suivant la fin du dernier cycle de balayage.

6. Procédé selon la revendication 5, **caractérisé en ce que** la quatrième période de temps (T4) est égale à environ 15 secondes.

7. Dispositif de commande automatique des feux d'un véhicule automobile à partir d'une information de fonctionnement de moyens d'essuyage (5) du pare-brise de ce véhicule, pour la mise en oeuvre d'un procédé selon l'une quelconque des revendications précédentes, **caractérisé en ce que** les moyens d'essuyage (5) sont reliés à des moyens de pilotage automatique (1,4) de leur fonctionnement raccordés à un capteur de pluie (3) associé au véhicule et **en ce qu'**il comporte des moyens d'analyse (6) du fonctionnement des moyens d'essuyage du pare-brise de ce véhicule pour contrôler l'allumage/extinction des feux du véhicule.

## Patentansprüche

1. Verfahren zum automatischen Steuern der Scheinwerfer eines Kraftfahrzeugs anhand von Betriebsinformationen von Wischmitteln (5) für die Windschutzscheibe dieses Fahrzeugs, **dadurch gekennzeichnet, dass** die Scheinwerfer (8) des Fahrzeugs eingeschaltet werden (12):
- wenn die Wischmittel intermittierend (11) mit einer vorgegebenen Anzahl von Überstreichzyklen (n) während einer ersten Zeitdauer (T1) arbeiten,
- am Ende einer zweiten Zeitdauer (T2), falls die Wischmittel mit niedriger Geschwindigkeit arbeiten (14), oder
- am Ende einer dritten Zeitdauer (T3), falls die Wischmittel mit hoher Geschwindigkeit arbeiten (15).

2. Verfahren nach Anspruch 1, **dadurch gekennzeichnet, dass** die Anzahl der Zyklen (n) mindestens 5 ist und die erste Zeitdauer (T1) höchstens gleich etwa 40 Sekunden ist.

3. Verfahren nach Anspruch 1 oder 2, **dadurch gekennzeichnet, dass** die zweite Zeitdauer (T2) gleich etwa 10 Sekunden ist.

4. Verfahren nach einem der vorhergehenden Ansprüche, **dadurch gekennzeichnet, dass** die dritte Zeitdauer (T3) gleich etwa 2 Sekunden ist.

5. Verfahren nach einem der vorhergehenden Ansprüche, **dadurch gekennzeichnet, dass** die Scheinwerfer des Fahrzeugs nach einer vierter Zeitdauer (T4) nach dem Ende des letzten Überstreichzyklus ausgeschaltet werden.

6. Verfahren nach Anspruch 5, **dadurch gekennzeichnet, dass** die vierte Zeitdauer (T4) gleich etwa 15 Sekunden ist.

7. Vorrichtung zum automatischen Steuern der Scheinwerfer eines Kraftfahrzeugs anhand von Betriebsinformationen von Wischmitteln (5) für die Windschutzscheibe dieses Fahrzeugs, um ein Verfahren nach einem der vorhergehenden Ansprüche auszuführen, **dadurch gekennzeichnet dass** die Wischmittel (5) mit automatischen Steuermitteln (1, 4) für ihren Betrieb verbunden sind, die ihrerseits mit einem zu dem Fahrzeug gehörenden Regensensor (3) verbunden sind, und dass sie Mittel (6) für die Analyse des Betriebs der Wischmittel für die Windschutzscheibe dieses Fahrzeugs umfasst, um das Einschalten/Aussehalten der Scheinwerfer des Fahrzeugs zu steuern.

## Claims

1. Method for automatically controlling the lights of a motor vehicle from information on the operation of means (5) for wiping the windscreen of this vehicle, **characterized in that** the lights (8) of the vehicle are switched on (12) :
- when the wiping means operate intermittently (11) with a predetermined number (n) of sweeping cycles during a first period of time (T1),
- at the end of a second period of time (T2) if the wiping means operate at a slow speed (14), or
- at the end of a third period of time (T3) if the wiping means operate at a high speed (15).

2. Method according to claim 1, **characterized in that** the number of cycles (n) is a minimum of 5 and the first period of time (T1) is equal to a maximum of approximately 40 seconds.

3. Method according to claim 1 or 2, **characterized in that** the second period of time (T2) is equal to approximately 10 seconds.

4. Method according to any one of the preceding claims, **characterized in that** the third period of time (T3) is equal to approximately 2 seconds.

5. Method according to any one of the preceding claims, **characterized in that** the lights of the vehicle are switched off (16) after a fourth period of time (T4) following the end of the last sweeping cycling.

6. Method according to claim 5, **characterized in that** the fourth period of time (T4) is equal to approximately 15 seconds.

7. Device for automatically controlling the lights of a motor vehicle from information on the operation of means (5) for wiping the windscreen of this vehicle, for implementing a method according to any one of the preceding claims, **characterized in that** the wiping means (5) are connected to means (1, 4) for automatically controlling their operation, connected to a rain sensor (3) associated with the vehicle and **in that** it includes means (6) for analysing the operation of the windscreen wiping means of this vehicle in order to control the action of switching on/switching off the lights of the vehicle.
